(19) Europäisches Patentamt
European Patent Office
Office européen des brevets

(11) **EP 4 325 395 A2**

(12) **EUROPEAN PATENT APPLICATION**

(43) Date of publication:
**21.02.2024  Bulletin 2024/08**

(21) Application number: **23191684.2**

(22) Date of filing: **16.08.2023**

(51) International Patent Classification (IPC):
**G06N 3/0442** (2023.01)      **G06N 3/042** (2023.01)
**G06N 3/09** (2023.01)

(52) Cooperative Patent Classification (CPC):
**G06N 3/042; G06N 3/0442; G06N 3/09**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **18.08.2022  IN 202241047002**

(71) Applicant: **Harman International Industries, Inc.**
**Stamford, Connecticut 06901 (US)**

(72) Inventors:
• **KURUSSITHODI, Harinarayanan**
  **Kuruthikadavath**
  **Stamford, CT, 06901 (US)**
• **BISWAL, Rajesh**
  **Stamford, CT, 06901 (US)**
• **GUPTA, Ravi Shanker**
  **Stamford, CT, 06901 (US)**

(74) Representative: **Kraus & Lederer PartGmbB**
**Thomas-Wimmer-Ring 15**
**80539 München (DE)**

(54)     **HYBRID RULE ENGINE FOR VEHICLE AUTOMATION**

(57)     One or more embodiments include techniques for automating vehicle routines. The techniques include receiving a rule that includes one or more deterministic elements and a machine learning element; collecting, during operation of the vehicle, a set of vehicle data based on the machine learning element; training a machine learning model that corresponds to the machine learning element using the set of vehicle data, wherein the machine learning model is used to process the machine learning element during execution of the rule.

FIG. 6

**EP 4 325 395 A2**

**Description**

**BACKGROUND**

**Field of the Various Embodiments**

Embodiments of the present disclosure relate generally to machine learning and, more specifically, to a hybrid rule engine for vehicle automation.

**Description of the Related Art**

Vehicles often include multiple different functions and features for user comfort and convenience, such as telephone connectivity, in-vehicle entertainment, navigation, customizable HVAC controls, customizable seat adjustment, and/or the like. Users can interact with and control such features using various different user controls, such as physical buttons and dials in the vehicle, via user interfaces presented via an in-vehicle display screen, via an application executing on a user device that communicates with the vehicle, voice commands, and/or the like. However, as the number of features and functions available in a vehicle increases, the number of different elements a user has to set, adjust, and/or control also increases. To reduce the amount of interaction and input needed from a user, vehicles can include various subsystems that are configured to automatically activate and/or control certain features and functions associated with the vehicle.

One approach for automating in-vehicle features and functions is to utilize machine learning to determine when and how to control a given feature or function. A machine learning model is trained to receive input associated with the state of the vehicle, such as the operating status of the vehicle, the status of one or more subsystems, the current operating conditions surrounding the vehicle, and/or the like, and determine one or more actions to perform based on the input. For example, a machine learning model could be configured to control the HVAC system of the vehicle based on the current state of the vehicle and the current weather conditions. However, one drawback of utilizing machine learning is that wide variations exist between the behavior of different users. Because of the differences in user behavior and preferences, it is difficult to train a machine learning model that properly predicts the full range of expected user behavior for a given scenario and/or determine the full range of scenarios that should trigger a given action. As a result, the automated action taken when using a machine learning model does not always align with the expectations and preferences of an individual user.

Another approach for automating in-vehicle features and functions is to utilize pre-defined rules. For example, a user could define a set of rules that specify a threshold temperature for turning on the air conditioning, a threshold temperature for turning on the heater, a temperature range for turning off the air conditioning and heater, and/or the like. A control system evaluates the rules to determine when and whether to turn the air conditioning and heater on or off. By using different pre-defined rules for each user, vehicle automation can be customized for each user and account for the preferences of individual users. However, one drawback is that in order to define a rule, both a specific action and a specific condition for triggering the action need to be specified by the user. Oftentimes, a user does not know the exact scenario in which they would like a given action to be taken, or the exact action(s) that they would like to be taken in a given scenario, which makes it difficult for the user to properly define a rule.

As the foregoing illustrates, what is needed in the art are more effective techniques for vehicle automation.

**SUMMARY**

Various embodiments of the present disclosure set forth a computer-implemented method for automating vehicle routines. The method includes receiving a rule that includes one or more deterministic elements and a machine learning element; collecting, during operation of the vehicle, a set of vehicle data based on the machine learning element; training a machine learning model that corresponds to the machine learning element using the set of vehicle data, wherein the machine learning model is used to process the machine learning element during execution of the rule.

Other embodiments include, without limitation, a system that implements one or more aspects of the disclosed techniques, and one or more computer-readable media including instructions for performing one or more aspects of the disclosed techniques.

At least one technical advantage of the disclosed techniques relative to the prior art is that, with the disclosed techniques, an automation system creates and executes vehicle automation routines that flexibly adapt to the behavior and preferences of individual users. Additionally, the automation system more accurately performs actions that conform to the expectations and preferences of the individual user compared to prior art approaches. Furthermore, because the automation system allows users to identify specific portions of an automation routine that should be learned based on user behavior, users do not have to fully define both the conditions and the actions for an automation routine when creating the automation routine. As a result, using the disclosed techniques, a user can create an automation routine even when the user does not know the exact scenario in which they would like a given action to be taken and/or the exact action(s) that they would like to have taken, which the user could not do using prior art approaches. These technical advantages provide one or more technological advancements over prior art approaches.

## BRIEF DESCRIPTION OF THE DRAWINGS

So that the manner in which the above recited features of the various embodiments can be understood in detail, a more particular description of the inventive concepts, briefly summarized above, may be had by reference to various embodiments, some of which are illustrated in the appended drawings. It is to be noted, however, that the appended drawings illustrate only typical embodiments of the inventive concepts and are therefore not to be considered limiting of scope in any way, and that there are other equally effective embodiments.

Figure 1 illustrates an example automation system according to various embodiments;

Figure 2 illustrates an example vehicle system that includes a hybrid rule engine, data manager, and model trainer of Figure 1, according to various embodiments;

Figure 3 illustrates an approach for training one or more machine learning models based on a hybrid rule, according to various embodiments;

Figure 4 illustrates an approach for using one or more trained machine learning models when evaluating a hybrid rule, according to various embodiments;

Figure 5 illustrates an example flow diagram of method steps for training a machine learning model that corresponds to a machine learning element included in a rule, according to various embodiments; and

Figure 6 illustrates an example flow diagram of method steps for using a machine learning model when evaluating a rule that includes a machine learning element, according to various embodiments.

## DETAILED DESCRIPTION

In the following description, numerous specific details are set forth to provide a more thorough understanding of the various embodiments. However, it will be apparent to one skilled in the art that the inventive concepts may be practiced without one or more of these specific details.

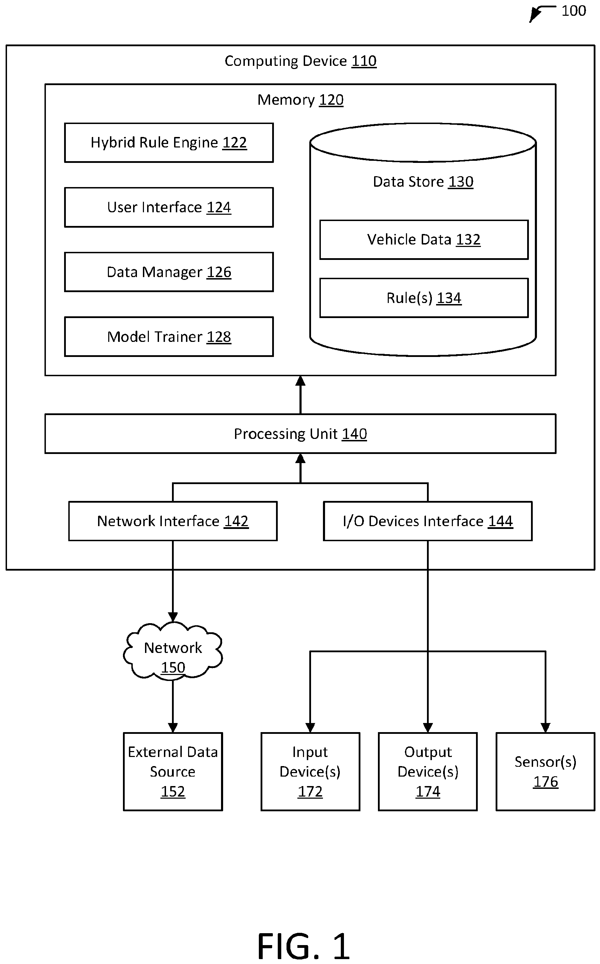

Figure 1 illustrates an automation system 100 according to one or more embodiments. As shown, the automation system 100 includes, without limitation, a computing device 110, a network 150, an external data store 152, input device(s) 172, output device(s) 174, and sensor(s) 176. The computing device 110 includes, without limitation, a memory 120, a processing unit 140, a network interface 142, and an input/output (I/O) devices interface 144.

Processing unit 140 can include one or more central processing units (CPUs), digital signal processing units (DSPs), microprocessors, application-specific integrated circuits (ASICs), neural processing units (NPUs), graphics processing units (GPUs), field-programmable gate arrays (FPGAs), and/or the like. Processing unit 140 generally includes a programmable processor that executes program instructions to manipulate input data and generate outputs. In some embodiments, processing unit 140 includes any number of processing cores, memories, and/or other modules for facilitating program execution. In some embodiments, processing unit 140 is configured to execute, without limitation, a hybrid rules engine 122, a user interface 124, a data manager 126, and/or model trainer 128 to perform one or more of the hybrid rule processing functionalities described herein.

Memory 120 can include a memory module or a collection of memory modules. Memory 120 generally includes storage chips such as random-access memory (RAM) chips that store application programs and data for processing by the processing unit 140. In various embodiments, memory 120 includes non-volatile memory, such as optical drives, magnetic drives, flash drives, and/or other storage. Various applications, such as hybrid rule engine 122, user interface 124, data manager 126, and model trainer 128, within memory 120 are executed by processing unit 140 to implement one or more of the hybrid rule processing functionalities described herein, such as parsing rules, identifying the location of machine learning elements within a rule, determining data collection criteria associated with a machine learning element of a rule, determining whether a set of vehicle conditions satisfies any stored rules, determining one or more actions associated with a stored rule, and/or the like.

As shown in Figure 1, memory 120 includes, without limitation, a hybrid rule engine 122, a user interface 124, a data manager 126, a model trainer 128, and a data store 130. Data store 130 stores data associated with the processing of hybrid rules and/or training machine learning models associated with the hybrid rules, such as vehicle data 132 and one or more rules 134. Additionally, in some embodiments, separate data stores, such as external data store 152 connected via network 150, are used to store additional data associated with the processing of hybrid rules and/or training machine learning models for the hybrid rules. For example, external data store 152 could be used to store vehicle data 132. Data manager 126 could collect the vehicle data 132 and transmit the collected data to external data store 152 for storage. Model trainer 128 retrieves the vehicle data 132 from external data store 152 for training one or more machine learning models.

Computing device 110, as a whole, can be a microprocessor, a system-on-a-ship (SoC), mobile computing device, vehicle head unit, in-vehicle console unit, and/or the like. In some embodiments, the computing device 110 is a mobile computing device, such as a tablet computer, mobile phone, media player, and so forth that wirelessly connects to other devices in a vehicle. In some embodiments, computing device 110 is a head unit or part of a head unit that is included in a vehicle system. In some embodiments, computing device 110 is a detachable device that is mounted in a portion of a vehicle as part of an individual console. In some embodiments, computing device 110 is split among multiple physical devices in one or more locations. For example, one or more remote devices (e.g., cloud servers, remote services, and/or the like) could perform one or more aspects of the techniques disclosed herein, such as hybrid rule parsing, vehicle data collection, data storage, machine learning model training, and/or the like.

In some embodiments, computing device 110 communicates with other devices, such as the input device(s) 172, output device(s) 174, and/or the sensor(s) 176, using the input/output (I/O) devices interface 144. In such embodiments, the I/O devices interface 144 includes any number of different I/O adapters or interfaces used to provide the functions described herein. For example, the I/O devices interfaces 144 could include wired and/or wireless connections and can use various formats or protocols.

In some embodiments, computing device 110 communicates with other devices, such as external data store 152, using the network interface 142 and network 150. In some embodiments, other types of networked computing devices (not shown) connect to computing device 110 via network interface 142 and network 150. Example networked computing devices include, without limitation, servers, desktop computers, mobile computing devices such as smartphones or tablet computers, and/or wearable devices such as wristwatches, headphones, and head-mounted display devices. In some embodiments, a networked computing device is used as an input device 172, output device 174, and/or sensor 176. Network 150 includes a plurality of network communication systems, such as routers and switches, configured to facilitate data communication between the computing device 110 and the external data store 152 and/or other networked computing devices.

The one or more input devices 172 include one or more devices capable of receiving one or more inputs, such as audio input devices (e.g., a microphone, a set of microphones, and/or a microphone array), keyboard, mouse, touch-sensitive screen, video input device (e.g., camera), and/or other devices for providing input data to the computing device 110. In some embodiments, the one or more input devices 172 include one or more vehicle components, vehicle subsystems, and/or vehicle applications. In some embodiments, the one or more input devices 172 include the one or more sensors 176. In some embodiments, the one or more sensors 176 include multiple types of sensors, include vehicle sensors (e.g., outward-facing cameras, accelerometers, and/or the like), occupant-facing sensors (e.g., cameras, microphones, motion sensors, and/or the like), and/or compartment non-occupant facing sensors (e.g., pressure sensors, temperature sensors, and/or the like). In some embodiments, the one or more input devices 172 and/or one or more sensors 176 provide a set of values associated with users of the vehicle (e.g., positions of users, noise level, and/or the like). In some embodiments, the one or more input devices 172 and/or one or more sensors 176 provide a set of values associated with the state of the vehicle (e.g., speed, temperature, component status, subsystem status, application status, and/or the like).

The one or more output devices 174 include one or more devices capable of providing output, such as a display screen, speakers, haptic output devices, and/or the like. In some embodiments, the one or more output devices 174 include various components to control the operation of the vehicle. For example, the one or more output devices 174 could include controllers to operate one or more windows, windshield wipers, locks, doors, and/or the like. In some embodiments, the one or more output devices 174 include various vehicle subsystems, such as an air conditioning subsystem, navigation subsystem, entertainment subsystem, and/or the like. In such instances, the one or more output devices 174 are configured to receive commands (e.g., from computing device 110) and generate signals to cause a specific action to be performed.

Automation system 100 is generally configured to process and/or evaluate rules that include both deterministic elements and machine learning elements, such as rules 134. A deterministic element is a condition or action that has been explicitly specified (e.g., by a user). A machine learning element is a condition or action that has not been explicitly specified and is instead learned via a machine learning model. In some embodiments, each rule corresponds to a different vehicle automation routine. Each condition included in a rule corresponds to a different vehicle condition that is associated with the operation of the vehicle or with applications operating within the vehicle (e.g., vehicle state, environment conditions, application events, and/or the like). Each action included in the rule corresponds to a different action that is taken by a vehicle component (e.g., vehicle behaviors, application events, and/or the like) in response to the condition(s) of the rule being satisfied. Example hybrid rules are given by rules (1) and (2) below:

$$\langle \text{cabin temperature} >= 80 \rangle \text{ and } \langle \text{window} == \text{up} \rangle \text{ then do } \langle \text{ML action} \rangle \qquad (1)$$

$$\langle \text{ML cabin temperature} \rangle \text{ and } \langle \text{window} == \text{up} \rangle \text{ then do } \langle \text{turn on AC} \rangle \qquad (2)$$

As shown, the condition portion of rules (1) and (2) each include two conditions and the action portion of rules (1) and (2) each include a single action. In rule (1), the condition < cabin temperature >= 80> is satisfied if the vehicle cabin temperature is greater than or equal to 80 degrees. The condition <window == up> is satisfied if the windows of the vehicle are up. Accordingly, the conditions of rule (1) are met when both the temperature in the cabin is greater than or equal to 80 degrees and the windows of the vehicle are up. The action <ML action> indicates that the action that should be performed when the conditions of rule (1) are satisfied is a learned action, and that the specific action(s) that should be performed should be learned by a machine learning model. As discussed in further detail below, a machine learning model that corresponds to a given learned action is trained to determine the specific action(s) that should be taken. In response to a set of vehicle conditions meeting the conditions of rule (1), a trained machine learning model corresponding to the learned action <ML action> is used to identify one or more actions that should be performed as part of performing the actions specified by rule (1).

In rule (2), the condition <ML cabin temperature> indicates that the condition is a learned condition, and that the specific cabin temperature(s) that meet the condition should be learned by a machine learning model. As discussed in further detail below, a machine learning model that corresponds to a given learned condition is trained to determine the specific condition(s) that trigger the set of actions specified in the rule. Accordingly, the conditions of rule (2) are met when the windows of the vehicle are up and when a trained machine learning model corresponding to the learned condition <ML cabin temperature> indicates that the cabin temperature satisfies the learned condition. The action <turn on AC> specifies that the AC should be turned on if the conditions of rule (2) are met by the set of vehicle conditions.

Automation system 100 processes each rule to identify one or more machine learning elements. Automation system 100 then trains, for each machine learning element, a machine learning model that corresponds to the machine learning element. Subsequently, the automation system 100 monitors a set of vehicle conditions to determine whether the set of vehicle conditions satisfy any rules. If the set of conditions specified by a given rule includes a learned condition (i.e., a machine learning element associated with a condition), the automation system 100 utilizes a trained machine learning model that corresponds to the condition when determining whether the set of vehicle conditions satisfies the given rule. If the automation system 100 determines that the set of vehicle conditions meets the set of conditions specified by a rule, the automation system 100 identifies a set of actions specified by the rule and causes the applicable components of the vehicle to perform the set of actions. If the set of actions includes a learned action (i.e., a machine learning element associated with an action), the automation system 100 utilizes a trained machine learning model that corresponds to the action when determining the set of actions.

In operation, computing device 110 executes a hybrid rule engine 122 in order to process one or more rules 134. Hybrid rule engine 122 is configured to receive a rule 134 and process the rule 134 to identify one or more machine learning elements included in the rule 134. In some embodiments, hybrid rule engine 122 receives and/or retrieves a rule 134 that has been stored in data store 130. In some embodiments, hybrid rule engine 122 receives user input specifying a rule, for example, via user interface 124. The user input specifies one or more conditions for the rule and one or more actions to be performed if the one or more conditions are met. Hybrid rule engine 122 processes the user input to generate a rule 134. Additionally, in some embodiments, hybrid rule engine 122 stores the generated rule 134, such as in data store 130.

In some embodiments, a user interface 124 includes user interface elements for specifying one or more conditions and one or more actions for creating a new rule. For example, the user interface could present a set of pre-defined conditions and a set of pre-defined actions for the user to select. Each condition included in the set of pre-defined conditions could correspond to a different vehicle condition that is associated with the operation of the vehicle or with applications operating within the vehicle. Each action included in the set of pre-defined actions could correspond to a different action that can be taken by a vehicle component. The set of pre-defined conditions can also include one or more learned conditions that indicate that the specified condition should be learned. For example, the set of pre-defined conditions could include the condition <ML condition>, indicating that the condition should be learned. Additionally or alternately, a given learned condition could be associated with a specific vehicle condition, component, and/or application. For example, referring to rule (2) the learned condition <ML cabin temperature> is associated with the temperature of the cabin. Similarly, the set of pre-defined actions can include one or more learned actions that indicate that the specified action should be learned. For example, the set of pre-defined actions could include the action <ML action>, indicating that the action should be learned. Additionally or alternately, a given learned action could be associated with a specific vehicle component, application, and/or other vehicle operation. For example, a learned action <ML HVAC> could be used to indicate that an action associated with the HVAC system should be learned. Generally, any suitable learned conditions can be included in a set of pre-defined conditions and any suitable learned actions can be included in a set of pre-defined actions. A given learned condition or action can be associated with a vehicle condition, component, application, and/or the like at any level of granularity.

In some embodiments, the user interface 124 includes user interface elements for specifying a value associated with a vehicle condition (e.g., whether the selected condition should be greater than, equal to, or less than the specified value and/or within a range of values) and/or for indicating that the value associated with the vehicle condition should be learned. In some embodiments, the user interface 124 includes user interface elements for specifying a value associated with an action (e.g., on/off, setting a control to a specified value, and/or the like) and/or for indicating that the action taken by the vehicle component should be learned. Additionally, in some embodiments, the user interface 124 includes user interface elements for selecting operators (e.g., AND or OR) for combining multiple conditions or multiple actions.

In various embodiments, user interface 124 is provided through any component of automation system 100. In some embodiments, user interface 124 is provided by a separate computing device that is communicatively coupled with computing device 110, such as through an application executing on a mobile device or wearable computing device of a user. In some embodiments, an infotainment system (e.g., included in an entertainment subsystem of a vehicle head unit) provides the user interface 124 via a display and/or a voice digital assistant. In some embodiments, user interface 124 receives verbal commands for user selections. In such embodiments, computing device 110 performs speech recognition on the received verbal commands and/or compares the verbal commands against commands stored in memory 120, such as in data store 130. Computing device 110 then generates a hybrid rule based on the received verbal commands.

Upon receiving a new hybrid rule, hybrid rule engine 122 processes the rule to identify one or more machine learning elements included in the rule. For example, referring to rules (1) and (2), each element of the rule could correspond to a different tag, denoted by angled brackets. Hybrid rule engine 122 could parse the rules to identify any tags that include the words "ML," such as <ML temperature> and <ML action>, or to determine whether specific tags are included in the rules. In various embodiments, other text, phrases, symbols, and/or other indicators can be used in a rule to denote a machine learning element. Generally, any suitable approach or technique can be used to identify the machine learning elements included in a rule.

For each identified machine learning element, hybrid rule engine 122 determines a context of the machine learning element. In some embodiments, the context of a machine learning element includes any other actions and/or conditions included in the rule. For example, if the machine learning element corresponds to a condition in the rule, the context includes the set of actions specified by the rule and any other conditions specified by the rule, if any. As another example, if the machine learning element corresponds to an action in the rule, the context includes the set of conditions specified by the rule and any other actions specified by the rule. The context for each machine learning element is used to collect training data for training a machine learning model corresponding to the machine learning element. In some embodiments, hybrid rule engine 122 generates a set of data collection criteria based on the context and transmits the set of data collection criteria to a data manager 126. In some embodiments, hybrid rule engine 122 transmits the context for a machine learning element to data manager 126, and data manager 126 determines a set of data collection criteria based on the context for the machine learning element. Additionally, in some embodiments, hybrid rule engine 122 transmits data indicating the machine learning element with which the set of data collection criteria and/or context information is associated.

In some embodiments, the set of data collection criteria includes the actions and/or conditions in the context of the machine learning element. For example, referring to rule (1), the context for the machine learning portion <ML action> would be the vehicle cabin temperature being greater than or equal to 80 and the windows being up. The data collection criteria associated with rule (1) would indicate that vehicle data should be collected when the current temperature of the vehicle cabin is greater than or equal to 80 degrees and the windows of the vehicle are currently up. As another example, referring to rule (2), the context for the machine learning portion <ML temperature> would be the windows being up and the AC being turned on. The data collection criteria associated with rule (2) would indicate that vehicle data should be collected when the windows of the vehicle are up and the AC is turned on.

In some embodiments, the data collection criteria indicate one or more specific types of vehicle data that should be collected. The one or more specific types of vehicle data could correspond to the machine learning element and/or the context of the machine learning element. For example, the data collection criteria for rule (2) could indicate that vehicle data associated with the vehicle cabin temperature should be collected. Additionally, the data collection criteria could indicate that vehicle data associated with the state of the windows and the state of the HVAC system should be collected.

In some embodiments, the data collection criteria indicate a time range in which vehicle data should be collected.

The specific time frame can vary, for example, based on configuration information, user preferences, user input received in conjunction with the rule 134, the specific machine learning element, and/or the like. For example, if a machine learning element is associated with an action, then the data collection criteria could indicate that vehicle data should be collected for a given amount of time after the data collection criteria has been satisfied (i.e., after the set of conditions specified by the rule 134 are satisfied), in addition to vehicle data from the time the data collection criteria was satisfied. As another example, if a machine learning element is associated with a condition, then the data collection criteria could indicate that vehicle data for a given period of time prior to the data collection criteria being satisfied should be collected (i.e., prior to the set of actions specified by the rule 134 being performed), in addition to vehicle data from the time the data collection criteria was satisfied.

Data manager 126 monitors a set of data to determine whether the data meets the data collection criteria. If the data meets the data collection criteria, data manager 126 stores the data, for example, in data store 130. In some embodiments, data manager 126 monitors a set of vehicle conditions for the vehicle and stores a set of vehicle data 132 to data store 130 when the set of data collection criteria are satisfied. The vehicle data 132 includes, for example and without limitation, one or more of data associated with the operation of the vehicle or with applications operating within the vehicle, such as one or more current vehicle conditions, one or more vehicle conditions occurring prior to the data collection criteria being met, and/or one or more vehicle conditions occurring after the data collection criteria was met. In some embodiments, the vehicle data 132 includes time data indicating a time at which the vehicle data 132 was collected. In some embodiments, data manager 126 stores a subset of the vehicle conditions monitored by the data manager 126. In such embodiments, data manager 126 determines which vehicle conditions should be stored based on the data collection criteria. In some embodiments, data manager 126 determines which rule and/or machine learning element is associated with the data collection criteria that was met. Data manager 126 stores the vehicle data 132 in association with the rule and/or the machine learning element. For example, data manager 126 could store a first set of vehicle data 132 in association with rule (1) and a second set of vehicle data 132 in association with rule (2).

Data manager 126 collects data for a given machine learning element until data manager 126 determines that sufficient data has been collected. For example, data manager 126 could determine whether the amount of data collected exceeds a threshold amount (e.g., threshold number of data sets) has been collected and/or if data has been collected for a specified amount of time (e.g., one week). In some embodiments, the criteria for determining whether sufficient data has been collected for a machine learning element is included in the data collection criteria for the machine learning element. In some embodiments, data manager 126 is configured to collect a given amount of data and/or for a given amount of time for each machine learning element.

Model trainer 128 trains a machine learning model using the vehicle data 132. The machine learning model can be any technically feasible model and model trainer 128 can train the machine learning model using any suitable machine learning algorithm. In some embodiments, model trainer 128 trains a long short-term memory (LSTM) neural network model. In such embodiments, model trainer 128 uses any suitable LSTM algorithm for training the machine learning model. If the machine learning portion corresponds to a condition of a rule 134, model trainer 128 trains a LSTM model to predict a vehicle state that leads to a given action based on the vehicle data 132. If the machine learning portion corresponds to an action of a rule 134, model trainer 128 trains a LSTM model to predict an action resulting from a given vehicle state based on the vehicle data 132.

In some embodiments, after training, model trainer 128 provides the trained machine learning model to hybrid rule engine 122. Hybrid rule engine 122 associates the trained machine learning model with the corresponding rule 134 and/or the corresponding machine learning element of the rule 134. Hybrid rule engine 122 uses the trained machine learning model when executing the rule 134. If the machine learning element corresponds to a condition, hybrid rule engine 122 executes the trained machine learning model to determine whether the condition is satisfied. If the machine learning portion corresponds to an action, hybrid rule engine 122 executes the trained machine learning model to determine an action that should be performed if the conditions of the rule have been satisfied. In some embodiments, executing the trained machine learning model includes providing a set of vehicle conditions as input to the trained machine learning model and receiving output indicating whether a condition has been met (if the machine learning model corresponds to a learned condition) or output indicating an action to perform (if the machine learning model corresponds to a learned action).

Hybrid rule engine 122 monitors various vehicle conditions that are associated with the operation of the vehicle or applications operating within the vehicle, such as the vehicle state, environmental conditions, application events, and/or the like, via one or more vehicle components (e.g., one or more input devices 172 and/or one or more sensors 176). In some embodiments, hybrid rule engine 122 responds to a change in one or more vehicle conditions by comparing the current set of vehicle conditions against the conditions of one or more rules 134 to determine whether the conditions of a given rule 134 is satisfied. Upon determining that the conditions specified by a rule 134 are satisfied, the hybrid rule engine 122 determines one or more actions specified by the rule 134 and causes the corresponding vehicle component (e.g., one or more output devices 174) to perform the one or more actions specified by the rule 134.

In some embodiments, hybrid rule engine 122 processes each rule 134 to determine the location(s) of one or more machine learning elements included in the rule 134. If hybrid rule engine 122 determines that a machine learning element is included in the set of conditions for the rule 134 (i.e., corresponds to a learned condition), hybrid rule engine 122 inputs the current set of vehicle conditions into a trained machine learning model corresponding to the machine learning element to determine whether the learned condition is satisfied. If hybrid rule engine 122 determines that a machine learning element is included in a set of actions for the rule 134 (i.e., corresponds to a learned action), if the conditions specified by the rule 134 are satisfied, hybrid rule engine 122 inputs the current set of vehicle conditions into a trained machine learning model corresponding to the machine learning element to determine one or more actions that should be performed as part of performing the learned action.

In some embodiments, hybrid rule engine 122 replaces a machine learning element of the rule 134 with the output of the corresponding trained machine learning model 320. For example, referring to rule (1), a trained machine learning model could generate output indicating that the learned action should be turning on the vehicle air conditioning. Hybrid rule engine 122 replaces the learned action <ML action> with the action <turn on AC>. Hybrid rule engine 122 stores the updated rule (1), for example in data store 130. Subsequently, when executing rule (1), hybrid rule engine 122 uses the updated rule that does not include any machine learning elements. Similarly, referring to rule (2), a trained machine learning model could generate output indicating that the learned condition should be the vehicle cabin temperature being equal to or greater than 75. Hybrid rule engine 122 replaces the learned condition <ML cabin temperature> with the condition <cabin temperature >= 75>. Hybrid rule engine 122 stores the updated rule (2) and, when executing rule (2), uses the updated rule that does not include any machine learning elements.

In some embodiments, after determining that one or more actions should be performed by one or more corresponding vehicle components, hybrid rule engine 122 generates one or more commands to cause the corresponding vehicle components to perform the specified actions. For example, upon determining that rule (2) has been satisfied, hybrid rule engine 122 determines that the air conditioning of the vehicle should be turned on. Hybrid rule engine 122 transmits a command to the HVAC system, or to a separate vehicle subsystem that controls the HVAC system, causing the air conditioning to be turned on.

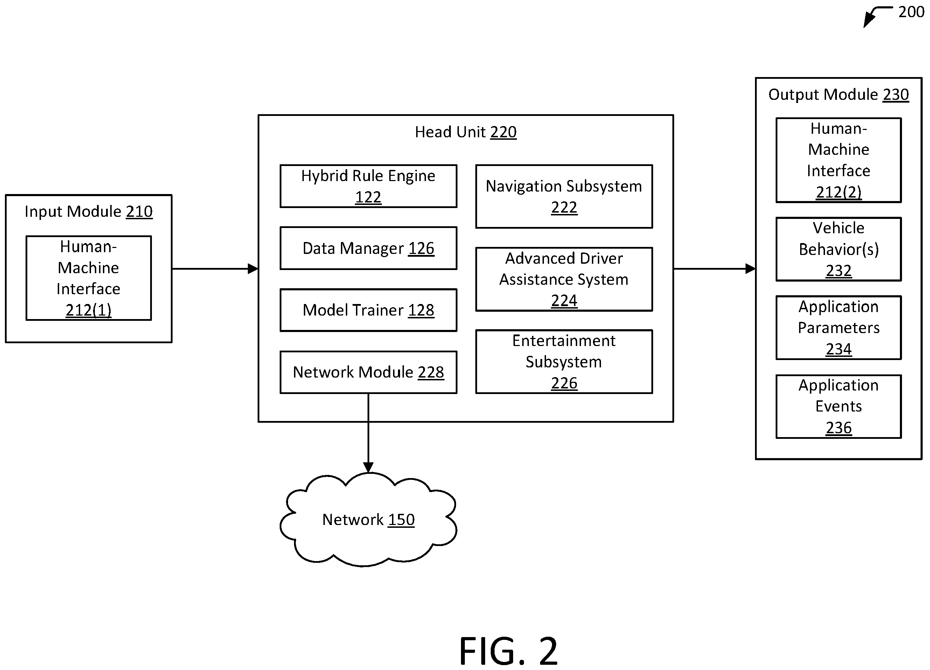

Figure 2 illustrates an example vehicle system 200 that includes a hybrid rule engine 122, data manager 126, and model trainer 128 of Figure 1, according to various embodiments. As shown, vehicle system 200 includes, without limitation, an input module 210, a head unit 220, and an output module 230. In various embodiments, the automation system 100 is included in the vehicle system 200 in order process hybrid rules corresponding to different personalized routines for the vehicle locally for various components of the vehicle to perform. In some embodiments, the hybrid rule engine 122 monitors information from one or more subsystems of the vehicle system 200 (e.g., one or more subsystems included in head unit 220) and responds to a triggering event for a given rule 134 by causing one or more subsystems to perform an action specified by the given rule 134. In some embodiments, the hybrid rule engine 122 causes a first subsystem to perform an action in response to a condition associated with a different subsystem being satisfied. For example, the hybrid rule engine 122 could receive information from a navigation subsystem, determine based on the information that a rule 134 is satisfied, and respond by controlling one or more components of an entertainment system.

As shown in Figure 2, input module 210 includes a human-machine interface (HMI) instance 212(1). In some embodiments, HMI instance 212(1) includes the user interface 124. In such embodiments, a user provides inputs, such as inputs for creating a hybrid rule corresponding to a new personalized routine, by interacting with the user interface 124. For example, a user could provide input via button presses, touchscreen selections, voice control, and/or other digital inputs to initiate a routine creation process, select different elements of a hybrid rule, confirm selections, confirm entry of the hybrid rule, and/or the like.

The head unit 220 is a component of the vehicle system 200 that is mounted at any location within a passenger compartment of the vehicle and in any technically feasible fashion. The head unit 220 can include any number and type of instrumentation and applications, can provide any number of input and/or output mechanisms, and can support any number of input and/or output data types and formats. For example, the head unit 220 could include built-in Bluetooth for hands-free calling and/or audio streaming, universal serial bus (USB) connections, speech recognition, real-view camera inputs in a sensing module, video outputs via an output module 230 for any number and type of displays, and/or any number of audio outputs. In various embodiments, any number of sensors (e.g., sensors 176), displays, receivers, transmitters, etc. can be integrated into the head unit 220 and/or implemented externally to the head unit 220. Additionally, in some embodiments, one or more external devices communicate with the head unit 220 in any technically-feasible fashion. For example, the user interface 124 could be included in an application executing on a user device. The application could transmit a hybrid rule entered via the user interface 124 on the user device to head unit 220 using, for example, a Bluetooth or USB connection between the user device and the head unit 220. As shown in Figure 2, head unit 220 includes hybrid rule engine 122, data manager 126, model trainer 128, navigation subsystem 222, advanced driver assistance system (ADAS) 224, entertainment subsystem 226, and network module 228.

The entertainment subsystem 226 provides various information to the controlling user and/or one or more other occupants of the vehicle via the output module 230. For example, the head unit 220 could provide to the driver route information generated by navigation subsystem 222 via an HMI 212. In various embodiments, hybrid rule engine 122 controls various components associated with the entertainment subsystem 226, such as media sources (e.g., internal sources or external media providers via network module 228) and/or the output devices (e.g., output devices 174 such as speakers, displays, the HMI 212, and/or the like). In some embodiments, network module 228 transmits data acquired by head unit 220 to other computing devices. In some embodiments, one or more modules connected to the head unit 220 and/or one or more subsystems included in head unit 220 receive data from remote sources via the network module 228.

The output module 230 performs one or more actions in response to commands from the hybrid rule engine 122. In some embodiments, in response to a command from hybrid rule engine 122 to perform an action, output module 230 generates one or more output signals that causes an application or other vehicle component to perform the action. For example, output module 230 could generate one or more output signals to modify H1VΠ 212(2) to display notification messages and/or alerts. As another example, output module 230 could generate one or more control signals to cause the vehicle to perform one or more vehicle behaviors 232. In addition, if output module 230 is generating one or more output signals to modify, trigger, and/or otherwise interact with an application, the one or more output signals can include application parameters 234 and/or application events 236.

## Vehicle Automation using Hybrid Rules

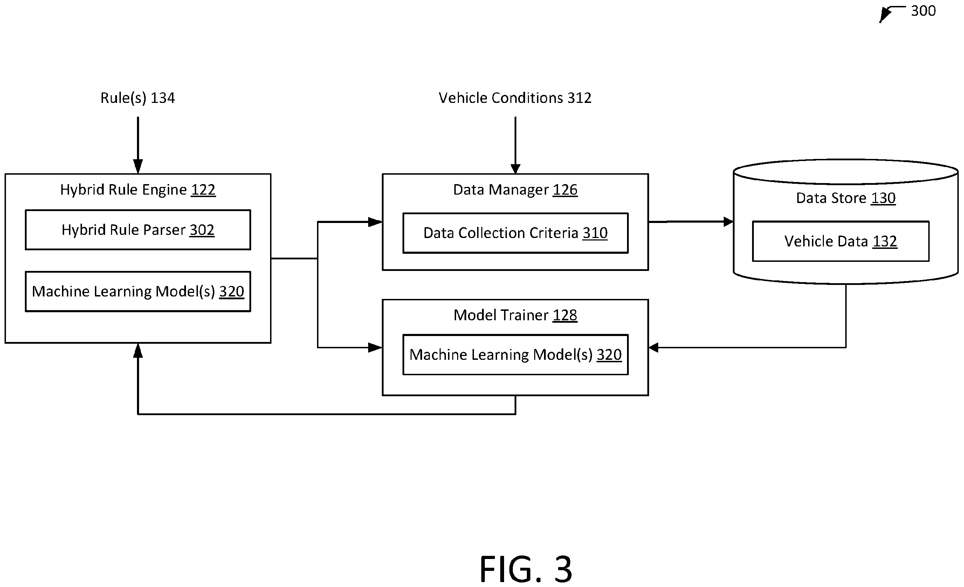

Figure 3 illustrates an approach for training one or more machine learning models based on a hybrid rule, according to various embodiments. As shown in Figure 3, automation system 300 includes, without limitation, hybrid rule engine 122, data manager 126, model trainer 128, and data store 130. Hybrid rule engine 122 includes, without limitation, a hybrid rule parser 302 and one or more machine learning models 320.

As shown in Figure 3, hybrid rule engine 122 receives one or more rules 134. In some embodiments, a rule 134 corresponds to an automated routine for a vehicle. In some embodiments, hybrid rule engine 122 receives a rule 134 via a user interface 124, such as a user interface included in H1VΠ 212, in an application executing on a user computing device, and/or the like. In some embodiments, one or more pre-existing rules are stored in data store 130, and hybrid rule engine 122 receives and/or retrieves one or more rules 134 from data store 130.

A rule 134 can include both one or more deterministic elements and one or more machine learning elements. Hybrid rule parser 302 parses the rule 134 to identify the one or more machine learning elements included in the rule 134, if any. Hybrid rule parser 302 can use any technically feasible approach for identifying a machine learning element included in a rule. In some embodiments, rule 134 includes a plurality of tags, where each tag specifies a condition or an action. Hybrid rule parser 302 identifies tags that are associated with machine learning elements and/or that include language used to denote a machine learning element. In some embodiments, hybrid rule parser 302 uses one or more natural language processing algorithms to identify portions of the rule 134 that are associated with machine learning. In various embodiments, hybrid rule parser 302 uses any technically feasible approach to identify the elements included in a rule.

If hybrid rule parser 302 identifies a machine learning element, hybrid rule parser 302 determines a context of the machine learning element. In some embodiments, the context of the machine learning element includes each other element included in the rule 134, such as one or more deterministic elements included in the rule 134. In some embodiments, if the rule 134 includes multiple machine learning elements, the context of a machine learning model includes the deterministic elements but does not include the other machine learning elements. In some embodiments, hybrid rule parser 302 determines a location of the machine learning element within the rule 134. If the machine learning element corresponds to an action, the context includes the set of conditions specified by the rule. If the machine learning element corresponds to a condition, the context includes the set of actions specified by the rule.

In some embodiments, hybrid rule parser 302 generates a set of data collection criteria 310 based on the context of the machine learning element. Hybrid rule parser 302 transmits the set of data collection criteria 310 to data manager 126. In some embodiments, hybrid rule parser 302 transmits the context of the machine learning element to data manager 126, and data manager 126 generates the set of data collection criteria 310 based on the context of the machine learning element.

The set of data collection criteria 310 specify criteria for collecting training data for training a machine learning model corresponding to the machine learning element, such as criteria one or more vehicle conditions should meet before data can be stored, the type(s) of data to collect, an amount of data that should be collected prior to training, a duration of time in which data should be collected, and/or the like. In some embodiments, the set of data collection criteria 310 includes the actions and/or conditions in the context of the machine learning element. For example, hybrid rule parser 302 could generate data collection criteria 310 specifying that data should be collected when the vehicle conditions match the context of the machine learning element. In some embodiments, the data collection criteria 310 could indicate one or more specific types of vehicle data that should be collected. For example, hybrid rule parser 302 could determine one or more specific types of vehicle data that are associated with the machine learning element and/or the context of the machine learning element and generate data collection criteria 310 specifying that the one or more specific types of vehicle data should be collected.

Data manager 126 monitors a set of vehicle conditions 312 and determines whether the current set of vehicle conditions 312 satisfies the set of data collection criteria 310. In various embodiments, the data manager 126 receives the vehicle conditions 312 from one or more vehicle components, such as from navigation subsystem 222, ADAS 224, entertainment subsystem 226, and/or network module 228. In some embodiments, data manager 126 receives a subset of vehicle conditions 312 at times when a value associated with a vehicle condition changes. For example, when a system changes state (e.g., the air conditioning or heater transitions from off to on), data manager 126 receives a subset of vehicle conditions 312 that includes the updated state of the HVAC system. In some embodiments, data manager 126 periodically receives the set of vehicle conditions 312 (e.g., every 10 seconds, 30 seconds, every minute, and/or the like). The set of vehicle conditions 312 can include various values monitored by various vehicle components (e.g., environmental, physiological, and/or other data acquired by the sensors 176), information associated with the state of one or more vehicle components, information associated with applications that a vehicle component is running (e.g., information associated with content items that the entertainment subsystem 226 is playing), and/or the like.

If the current set of vehicle conditions 312 satisfies the set of data collection criteria 310, then data manager 126 stores the current set of vehicle conditions 312, or a portion thereof, in data store 130 as vehicle data 132. In some embodiments, data manager 126 stores the vehicle data 132 in conjunction with data indicating the rule 134 and/or machine learning element of the rule 134 for which the data has been collected. For example, data manager 126 could include multiple sets of data collection criteria 310, each corresponding to a different machine learning element. When data manager 126 determines that a given set of data collection criteria 310 has been met, data manager 126 determines which rule and/or which machine learning element is associated with the given data collection criteria. Data manager 126 stores the vehicle data 132 in association with the rule and/or the machine learning element.

In some embodiments, the vehicle data 132 includes data associated with the operation of the vehicle or with applications operating within the vehicle, such as one or more current vehicle conditions, one or more vehicle conditions occurring prior to the data collection criteria being met, and/or one or more vehicle conditions occurring after the data collection criteria was met. In some embodiments, the vehicle data 132 includes time data indicating a time at which the vehicle data 132 was collected. In some embodiments, data manager 126 stores a subset of the vehicle conditions monitored by the data manager 126. In such embodiments, data manager 126 determines which vehicle conditions should be stored based on the data collection criteria.

Data manager 126 collects data for each machine learning element until data manager 126 determines that sufficient data has been collected. For example, data manager 126 could determine whether the amount of data collected exceeds a threshold amount (e.g., threshold number of data sets) has been collected and/or if data has been collected for a specified amount of time (e.g.. one week). In some embodiments, data manager 126 determines when to stop collecting data for a machine learning element based on the data collection criteria 310 associated with the machine learning element. In some embodiments, data manager 126 is configured to collect data for a pre-determined amount of time (e.g., 1 day, 5 days, 1 week, 2 weeks, and/or the like). In some embodiments, data manager 126 is configured to collect a pre-determined amount of data (e.g., 50 sets of vehicle data 132, 100 sets, and/or the like). If data manager 126 is collecting data associated with multiple machine learning elements, data manager 126 could finish collecting data for different machine learning elements at different times (e.g., due to hybrid rule engine 122 receiving the rules containing the machine learning elements at different times, due to different criteria for when to stop collecting data, the data collection criteria for each machine learning element being satisfied at different frequencies, and/or the like).

In some embodiments, after data manager 126 finishes collecting data for a given machine learning element, data manager 126 causes the vehicle data 132 associated with the given machine learning element to be transmitted to a model trainer 128. For example, data manager 126 could transmit the vehicle data 132 to model trainer 128, request that a different component transmit the vehicle data 132 to model trainer 128, send a request to model trainer 128 that causes model trainer 128 to obtain the vehicle data 132 (e.g., from data store 130), send an indication to hybrid rule engine 122 that the vehicle data has been collected and cause hybrid rule engine 122 to send a request to model trainer 128, and/or the like.

Model trainer 128 uses the vehicle data 132 stored in data store 130 to train one or more machine learning models 320. Each machine learning model 320 corresponds to a different machine learning element included in a rule 134. In some embodiments, if model trainer 128 receives vehicle data 132 corresponding to multiple machine learning elements, model trainer 128 identifies, for each machine learning element, a subset of vehicle data 132 that is associated with the machine learning element. In some embodiments, model trainer 128 trains the one or more machine learning models 320 in response to receiving a request from data manager 126 and/or hybrid rule engine 122 to train a machine learning model. In some embodiments, the request includes the vehicle data 132 and/or an indication of the rule 134 for which a machine learning model 320 is being generated.

Model trainer 128 trains a machine learning model 320 corresponding to the machine learning element using the subset of vehicle data 132 associated with the machine learning element. In various embodiments, model trainer 128 uses any technically feasible machine learning algorithm or approach to train a machine learning model 320 using a set of vehicle data 132. In some embodiments, model trainer 128 trains the machine learning model 320 until the machine learning model 320 reaches a threshold level of accuracy.

In some embodiments, model trainer 128 trains a long short-term memory (LSTM) neural network model. The LSTM model is trained to predict dependencies between different vehicle states (e.g., different sets of vehicle conditions 312). In such embodiments, the vehicle data 132 includes, for each time the set of data collection criteria 310 was met, data corresponding to different vehicle conditions 312 that occurred before, during, and/or after the time the set of data collection criteria 310 was met. Because the data collection criteria 310 is based on a context of a machine learning element, the collected data reflects the vehicle state when the one or more conditions specified by the rule are met and the vehicle state when the one or more actions specified by the rule are performed. Using this data, model trainer 128 trains the LSTM model to predict, given a vehicle state (i.e., set of input vehicle conditions), an action to perform based on the vehicle state (if the machine learning element corresponds to a learned action) or a condition that leads to the vehicle state (if the machine learning element corresponds to a learned condition). In some embodiments, model trainer 128 receives context data associated with the machine learning element and/or data indicating a location of the machine learning element within a rule 134 (e.g., condition or action portion of the rule). Model trainer 128 determines a type of model to train based on whether the corresponding machine learning element is located in a condition portion of the rule or an action portion of the rule.

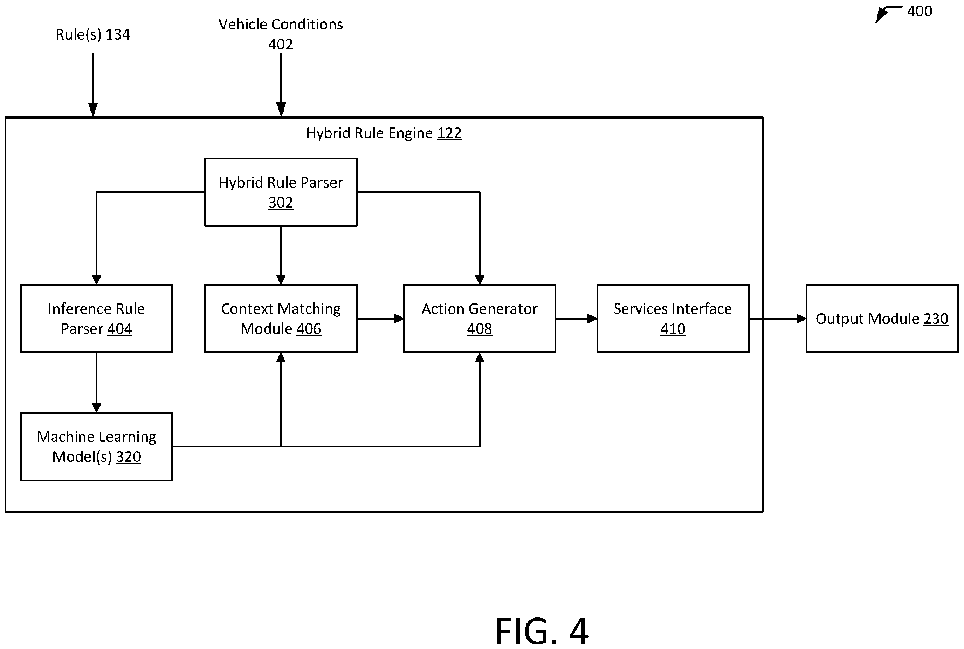

After training, model trainer 128 provides the one or more trained machine learning models 320 to hybrid rule engine 122. Hybrid rule engine 122 associates the trained machine learning model with the corresponding rule 134 and/or the corresponding machine learning element of the rule 134. In some embodiments, hybrid rule engine 122 stores data associating each trained machine learning model 320 with the corresponding rule 134. If a rule 134 includes multiple machine learning elements, hybrid rule engine 122 stores data associating the trained machine learning model 320 with the corresponding machine learning element. As described in further detail with respect to Figure 4, in some embodiments, hybrid rule engine 122 uses output generated by the trained machine learning model when evaluating the corresponding machine learning element of the rule. In some embodiments, hybrid rule engine 122 replaces the corresponding machine learning element of the rule with one or more specific actions or conditions, whichever the case may be, based on the output of the trained machine learning model and stores an updated rule 134.

Figure 4 illustrates an approach for using one or more trained machine learning models when evaluating a hybrid rule, according to various embodiments. As shown in Figure 4, automation system 400 includes, without limitation, a hybrid rule engine 122 and an output module 230. Hybrid rule engine 122 includes, without limitation, a hybrid rule parser 302, one or more machine learning models 320, inference rule parser 404, context matching module 406, action generator 408, and services interface 410.

As shown in Figure 4, hybrid rule engine 122 receives one or more rules 134 and a set of vehicle conditions 402. In some embodiments, each rule 134 corresponds to an automated routine for a vehicle. The vehicle conditions 402 are associated with the operation of the vehicle or applications operating within the vehicle, such as the vehicle state, environmental conditions, application events, and/or the like.

In various embodiments, hybrid rule engine 122 receives the set of vehicle conditions 402 from one or more vehicle components, such as from navigation subsystem 222, ADAS 224, entertainment subsystem 226, and/or network module 228. In some embodiments, hybrid rule engine 122 receives a set of vehicle conditions 402 at times when a value associated with a vehicle condition changes. For example, when a system changes state (e.g., the HVAC system transitions air conditioning from off to on), hybrid rule engine 122 could receive a set of vehicle conditions 402 that includes the updated state of the HVAC system. In some embodiments, hybrid rule engine 122 periodically receives the set of vehicle conditions 402 (e.g., every 10 seconds, 30 seconds, every minute, and/or the like). The set of vehicle conditions 402 can include various values monitored by various vehicle components (e.g., environmental, physiological, and/or other data acquired by the sensors 176), information associated with the state of one or more vehicle components, information associated with applications that a vehicle component is running (e.g., information associated with content items that the entertainment subsystem 226 is playing), and/or the like.

In some embodiments, hybrid rule engine 122 compares the set of vehicle conditions 402 against one or more conditions specified by each rule 134 to determine whether to perform one or more actions specified by the rule 134. When hybrid rule engine 122 detects that the one or more conditions specified by a given rule 134 have been met, hybrid rule engine 122 determines the one or more actions specified by the given rule 134. Hybrid rule engine 122 generates one or more commands for a service, component, and/or application of the vehicle that is to perform an action specified by the rule 134.

A given rule 134 can be a hybrid rule that includes both deterministic elements and machine learning elements. In some embodiments, for each machine learning element, hybrid rule engine 122 executes a machine learning model 320 that corresponds to the machine learning element. If the machine learning element corresponds to a condition, then hybrid rule engine 122 determines whether the condition is satisfied based on the output of the machine learning model 320. If the machine learning element corresponds to an action, then hybrid rule engine 122 determines one or more actions to perform based on the output of the machine learning model 320.

In some embodiments, hybrid rule engine 122 executes each machine learning model 320 and determines whether to use the output generated by each machine learning model 320 when evaluating the conditions specified by a rule 134 or when determining the actions specified by the rule 134. In some embodiments, when evaluating the one or more conditions of a rule 134, if hybrid rule engine 122 determines that the one or more conditions includes a learned condition, then hybrid rule engine 122 executes the machine learning model 320 corresponding to the learned condition to determine whether the condition is met. When determining the one or more actions of a rule 134, if hybrid rule engine 122 determines that the one or more actions includes a learned action, then hybrid rule engine 122 executes the machine learning model 320 corresponding to the learned action to determine the action to perform.

As shown in Figure 4, hybrid rule parser 302 receives a rule 134 and determines one or more deterministic elements and any machine learning elements included in the rule 134. In some embodiments, hybrid rule parser 302 parses the rule 134 to identify the elements included in the rule 134 and determines whether each element is a deterministic element or machine learning element. In various embodiments, hybrid rule parser 302 uses any technically feasible approach to identify the elements included in a rule. In some embodiments, each rule 134 includes a plurality of tags, where each tag specifies a condition or an action. Hybrid rule parser 302 determines, based on the contents of a tag, whether the tag corresponds to a deterministic element or machine learning element. For example, hybrid rule parser 302 could determine whether the contents of a tag are included in a list of pre-defined machine learning elements, whether the contents include word(s), phrase(s), symbol(s), and/or the like designated for denoting a machine learning element. In some embodiments, hybrid rule parser 302 uses one or more natural language processing algorithms to identify portions of the rule 134 that are associated with machine learning. If the rule 134 includes one or more machine learning elements, then hybrid rule parser 302 identifies each machine learning element and provides each machine learning element to inference rule parser 404.

Inference rule parser 404 receives a machine learning element and determines a location of the machine learning element in the rule 134 (i.e., whether the machine learning element corresponds to a condition or an action). In some embodiments, rather than transmitting one or more machine learning elements to an inference rule parser 404, hybrid rule parser 302 both identifies the one or more machine learning elements and determines the location of each machine learning element. In such embodiments, hybrid rule engine 122 does not include an inference rule parser 404.

In some embodiments, inference rule parser 404 parses the contents of the machine learning element to determine the location of the machine learning element. For example, inference rule parser 404 could determine whether the content of the machine learning element includes language associated with a condition (e.g., "ML condition") or language associated with an action (e.g., "ML action"). In some embodiments, inference rule parser 404 parses the rule 134 to determine the location of the machine learning element in the rule 134. For example, if the rule 134 includes a sentence following an "if... then..." structure, inference rule parser 404 determines whether the machine learning element is located before or after the "then" in the sentence. If the machine learning element is located before the "then," then inference rule parser 404 determines that the machine learning element is in the condition portion of the rule 134. If the machine learning element is located after the "then," then inference rule parser 404 determines that the machine learning element is in the action portion of the rule 134. In various embodiments, inference rule parser 404 can use any technically feasible approach or algorithm to determine the location of a machine learning element.

In some embodiments, hybrid rule engine 122 provides the set of vehicle conditions 402 to each trained machine learning model 320 associated with the rule 134 being evaluated. Each trained machine learning model 320 generates corresponding output based on the set of vehicle conditions 402. After determining the location of a machine learning element, inference rule parser 404 directs the output from each machine learning model 320 to one of context matching module 406 or action generator 408 based on the location of the corresponding machine learning element. For example, if inference rule parser 404 determines that a machine learning element is located in the condition portion of a rule 134, inference rule parser 404 directs the output from the corresponding machine learning model 320 to context matching module 406. If inference rule parser 404 determines that a machine learning element is located in the action portion of a rule 134, inference rule parser 404 directs the output from the corresponding machine learning model 320 to the action generator 408. In some embodiments, directing the output from a machine learning model 320 includes receiving the output and transmitting the output to the context matching module 406 or action generator 408. In some embodiments, directing the output from a machine learning model 320 includes determining a location to which the output is stored and transmitting an indication of the location to context matching module 406 or action generator 408.

In some embodiments, after determining the location of a machine learning element, inference rule parser 404 indicates to one of context matching module 406 or action generator 408 that evaluating the conditions or determining the actions of the rule 134, respectively, use a machine learning model 320. Additionally, in some embodiments, inference rule parser 404 indicates the specific machine learning model 320 associated with a given machine learning element.

Context matching module 406 receives the set of vehicle conditions 402 and one or more rules 134 and determines whether the set of vehicle conditions 402 satisfy the conditions specified by any of the rules 134. In some embodiments, context matching module 406 parses each rule 134 to determine the one or more conditions specified by the rule 134. For each condition, context matching module 406 compares the information included in the set of vehicle conditions 402 against the condition and determines whether the condition is satisfied by the set of vehicle conditions 402. For example, if a condition specifies that a particular vehicle component should be in a particular state, then context matching module 406 determines, based on the information included in the set of vehicle conditions 402, the state of the particular vehicle component. Context matching module 406 determines whether the state of the particular vehicle component matches the particular state specified by the condition.

If the conditions specified by a rule 134 includes a machine learning element, context matching module 406 evaluates the conditions specified by the rule 134 based on the output from a machine learning model 320 corresponding to the machine learning element. In some embodiments, inference rule parser 404 or hybrid rule parser 302 directs the output of the machine learning model 320 to context matching module 406. Context matching module 406 receives or retrieves the output of the machine learning model in conjunction with receiving the set of vehicle conditions 402. In some embodiments, inference rule parser 404 or hybrid rule parser 302 transmit an indication to context matching module 406 that the conditions include a machine learning element and/or the corresponding machine learning module 320. Context matching module 406 transmits the set of vehicle conditions 402 to the corresponding machine learning model 320 and receives the output generated by the machine learning model 320.

In some embodiments, a machine learning model 320 is trained to receive a set of vehicle conditions and output a predicted set of vehicle conditions. To determine whether the corresponding learned condition is satisfied, context matching module 406 determines whether the current set of vehicle conditions 402 matches the predicted set of vehicle conditions received from the machine learning model 320. In some embodiments, a machine learning model 320 outputs a predicted condition. To determine whether the corresponding learned condition is satisfied, context matching module 406 determines whether the current set of vehicle conditions 402 satisfies the predicted condition received from the machine learning model 320. In some embodiments, a machine learning model 320 outputs a prediction as to whether the current set of vehicle conditions 402 satisfies a learned condition.

If context matching module 406 determines that the set of conditions specified by a given rule 134 are satisfied, action generator 408 determines the set of actions specified by the given rule 134. In some embodiments, if context matching module 406 determines that the set of conditions specified by a given rule 134 are satisfied, context matching module 406 transmits an indication to action generator 408 that the conditions for the given rule 134 have been met. In some embodiments, context matching module 406 transmits data indicating the given rule 134, such as an identifier corresponding to the rule 134. In some embodiments, context matching module 406 transmits the given rule 134 to action generator 408.

Action generator 408 receives a rule 134 and determines one or more actions specified by the rule 134. If the actions specified by a rule 134 includes a machine learning element, action generator 408 determines the set of actions specified by the rule 134 based on the output from a machine learning model 320 corresponding to the machine learning element.

In some embodiments, inference rule parser 404 or hybrid rule parser 302 directs the output of the machine learning model 320 to action generator 408. Action generator 408 receives or retrieves the output of the machine learning model in conjunction with receiving the rule 134. In some embodiments, inference rule parser 404 or hybrid rule parser 302 transmit an indication to action generator 408 that the actions include a machine learning element and/or the corresponding machine learning module 320. In addition, in some embodiments, action generator 408 receives the set of vehicle conditions 402. Action generator 408 transmits the set of vehicle conditions 402 to the corresponding machine learning model 320 and receives the output generated by the machine learning model 320.

In some embodiments, a machine learning model 320 is trained to receive a set of vehicle conditions and output a predicted set of vehicle conditions. The predicted set of vehicle conditions specify one or more target values for the vehicle (e.g., target speed, temperature, component status, subsystem status, application status, and/or the like). To determine the action(s) corresponding to a learned action, action generator 408 determines, based on the current set of vehicle conditions 402, one or more actions that should be taken for the current set of vehicle conditions 402 to obtain the one or more target values for the vehicle (i.e., match the predicted set of vehicle conditions) received from the machine learning model 320. In some embodiments, a machine learning model 320 outputs a predicted action. Action generator 408 includes the predicted action in the set of actions for the rule 134.

In various embodiments, a services interface 410 generates one or more commands for a specific component, application, or service that is to perform an action specified by the rule 134. After action generator 408 determines the one or more actions that should be performed, action generator 408 transmits the one or more actions to services interface 410. For a given action, services interface 410 identifies the vehicle component, application, or service (e.g., navigation subsystem 222, ADAS 224, entertainment subsystem 226, network module 228, H1VΠ 212, and/or other output device 174) and generates a command to cause the identified vehicle component, application or service, whichever the case may be, to perform the action. For example, if the action is to change a playlist, services interface 410 could identify the entertainment subsystem 226 as the applicable service and generate a command to cause the entertainment subsystem 226 to change the playlist. As another example, if the action is to turn on the AC system, services interface 410 could identify the vehicle subsystem controlling the HVAC system and generate a command to cause the AC system to be turned on.

Output module 230 receives the one or more commands from services interface 410 and causes the applicable vehicle component, application, or service to perform the command. With respect to the above examples, output module 230 could transmit a command to the entertainment subsystem 226 to perform the application event 236 of changing the playlist. Similarly, output module 230 could transmit a command to the vehicle subsystem controlling the HVAC system to cause the vehicle behavior 232 to change by turning on the AC system.

**Hybrid Rule Generation**

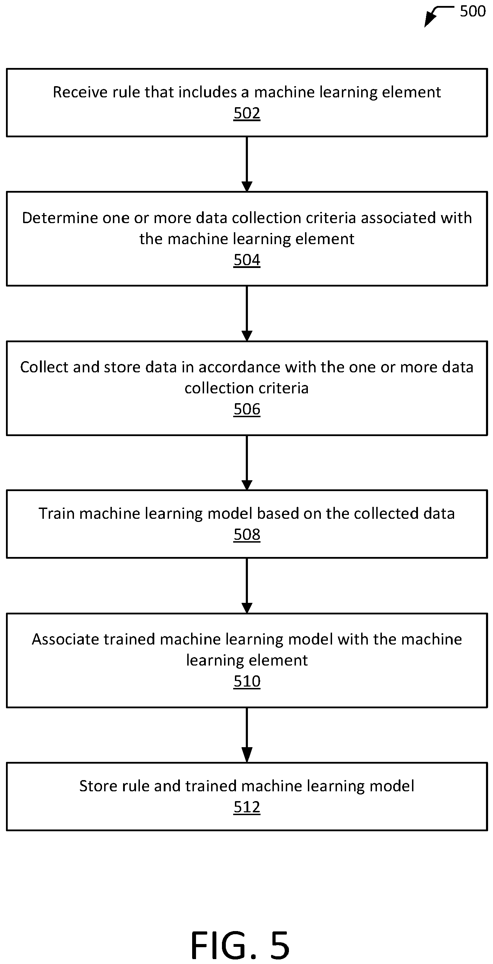

Figure 5 illustrates an example flow diagram of method steps for training a machine learning model that corresponds to a machine learning element included in a rule, according to various embodiments. Although the method steps are described in conjunction with the systems of Figures 1-4, persons skilled in the art will understand that any system configured to perform the method steps, in any order, is within the scope of the present disclosure.

As shown in Figure 5, a method 500 begins at step 502, where an automation system 100 receives a rule 134 that includes a machine learning element. In some embodiments, automation system 100 receives a rule 134 specified by a user, for example, via a user interface 124 included in H1VΠ 212, an application executing on a user computing device, and/or the like. In some embodiments, automation system 100 stores one or more pre-existing rules 134 in a data store 130 and automation system 100 retrieves a pre-existing rule 134 from the data store 130. In some embodiments, one or more rules 134 are stored, generated, and/or otherwise included in an external data source 152, and automation system 100 receives the rule 134 from the external data source 152 via a network 150.

At step 504, the automation system 100 determines one or more data collection criteria 310 associated with the machine learning element. The one or more data collection criteria 310 specify criteria for collecting training data for training a machine learning model corresponding to the machine learning element, such as criteria one or more vehicle conditions should meet before data can be stored, the type(s) of data to collect, an amount of data that should be collected prior to training, a duration of time in which data should be collected, and/or the like. Determining the one or more data collection criteria 310 is performed in a manner similar to that discussed above with respect to hybrid rule engine 122, hybrid rule parser 302, and data collection criteria 310.

In some embodiments, determining the one or more data collection criteria 310 includes determining a context of the machine learning element. In some embodiments, the context of the machine learning element includes each other element included in the rule 134, such as one or more deterministic elements included in the rule 134. In some embodiments, if the rule 134 includes multiple machine learning elements, the context of a machine learning model includes the deterministic elements but not include the other machine learning elements. In some embodiments, automation system 100 determines a location of the machine learning element within the rule 134. If the machine learning element corresponds to an action, the context includes the set of conditions specified by the rule. If the machine learning element corresponds to a condition, the context includes the set of actions specified by the rule.

Automation system 100 determines the one or more data collection criteria 310 based on the context of the machine learning element. In some embodiments, the set of data collection criteria 310 specifies that data should be collected when a set of vehicle conditions matches the context of the machine learning element. In some embodiments, the set of data collection criteria 310 specify a subset of vehicle conditions that should be stored, such as a subset of vehicle conditions that are associated with elements of the rule 134.

At step 504, the automation system 100 collects and stores data in accordance with the one or more data collection criteria 310. Collecting and storing data is performed in a manner similar to that discussed above with respect to data manager 126 and data collection criteria 310.

In some embodiments, automation system 100 monitors a set of vehicle conditions 312 and determines whether the current set of vehicle conditions 312 satisfies the set of data collection criteria 310. In various embodiments, automation system 100 receives the set of vehicle conditions 312 from one or more vehicle components, such as from navigation subsystem 222, ADAS 224, entertainment subsystem 226, and/or network module 228. In some embodiments, automation system 100 receives vehicle conditions 312 at times when a value associated with a vehicle condition changes. In some embodiments, automation system 100 receives the set of vehicle conditions 312 periodically.

If the current set of vehicle conditions 312 satisfies the set of data collection criteria 310, then automation system 100 stores the current set of vehicle conditions 312, or a portion thereof. For example, automation system 100 could store a current set of vehicle conditions 312 in data store 130 as vehicle data 132. In some embodiments, also stores data indicating the rule 134 and/or the machine learning element of the rule 134. In some embodiments, automation system 100 collects and stores data until a threshold amount of data has been collected and/or data has been collected for a threshold amount of time.

At step 508, the automation system 100 trains a machine learning model 320 corresponding to the machine learning element based on the collected data. Training a machine learning model based on collected data is performed in a manner similar to that discussed above with respect to model trainer 128 and machine learning model(s) 320. In some embodiments, automation system 100 trains a machine learning model 320 until the machine learning model 320 reaches a threshold level of accuracy.

In some embodiments, automation system 100 determines whether the machine learning element is included in a condition portion or an action portion of the rule 134. If the machine learning element is included in the condition portion of the rule 134, automation system 100 trains a machine learning model 320 that predicts a set of vehicle conditions that will lead to a target set of vehicle conditions (i.e., predict a set of vehicle conditions that cause the one or more actions specified in the rule 134). If the machine learning element is included in the action portion of the rule 134, automation system 100 trains a machine learning model 320 that predicts a set of vehicle conditions that are caused by or result from a set of vehicle conditions (i.e., predict a set of vehicle conditions that occur after the one or more conditions specified in the rule 134 are met) and indicate an action to be performed when the one or more conditions are met.

At step 510, the automation system 100 associates the trained machine learning model with the machine learning element. In some embodiments, automation system 100 generates data associating the trained machine learning model 320 with the rule 134. Additionally, in some embodiments, automation system 100 generates data associating the trained machine learning model 320 with the machine learning element of the rule 134.

At step 512, the automation system 100 stores the rule and trained machine learning model. In some embodiments, automation system 100 stores the rule and/or trained machine learning model in a data store included in the automation system 100, such as data store 130. In some embodiments, automation system 100 stores the rule and/or trained machine learning model to an external data source, such as external data source 152. The stored rule can subsequently be used by the automation system 100 to execute one or more vehicle automation routines during operation of the vehicle by evaluating the stored rule, and performing the actions specified by the stored rule if the conditions specified by the stored rule are met.

In some embodiments, if the rule 134 includes multiple machine learning elements, automation system 100 performs the steps 504-510 for each machine learning element included in the rule 134. Additionally, if automation system 100 receives multiple rules 134, automation system 100 performs the above steps 504-510 for each machine learning element included in each of the rules 134.

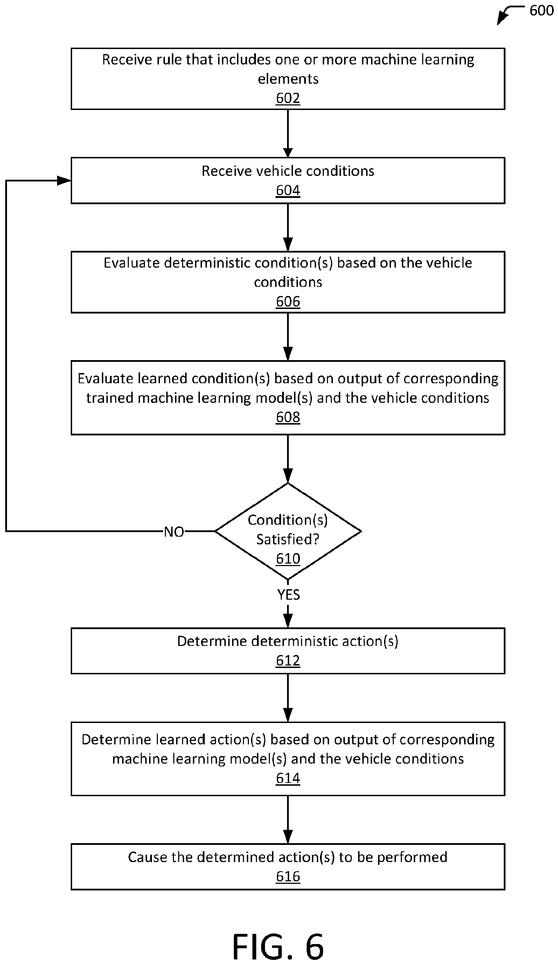

Figure 6 illustrates an example flow diagram of method steps for using a machine learning model when evaluating a rule that includes a machine learning element, according to various embodiments. Although the method steps are described in conjunction with the systems of Figures 1-4, persons skilled in the art will understand that any system configured to perform the method steps, in any order, is within the scope of the present disclosure.

As shown in Figure 6, a method 600 begins at step 602, where an automation system 100 receives a rule 134 that includes one or more machine learning elements. In some embodiments, automation system 100 stores one or more rules 134 in a data store 130 and automation system 100 retrieves the rule 134 from the data store 130. In some embodiments, one or more rules 134 are stored, generated, and/or otherwise included in an external data source 152, and the automation system 100 receives the rule 134 from the external data source 152 via a network 150.

At step 604, the automation system 100 receives a set of vehicle conditions 402. In some embodiments, automation system 100 monitors a set of vehicle conditions 312. In various embodiments, automation system 100 receives the set of vehicle conditions 312 from one or more vehicle components, such as from navigation subsystem 222, ADAS 224, entertainment subsystem 226, and/or network module 228. In some embodiments, automation system 100 receives vehicle conditions 312 at times when a value associated with a vehicle condition changes. In some embodiments, automation system 100 receives the set of vehicle conditions 312 periodically.

At step 606, the automation system 100 evaluates the deterministic conditions specified by the rule 134, if any, based on the set of vehicle conditions 402. Evaluating the deterministic conditions specified in a rule 134 is performed in a manner similar to that discussed above with respect to context matching module 406.

In some embodiments, automation system 100 parses the rule 134 to determine the set of conditions specified by the rule 134. For each condition, if the condition is a deterministic condition, automation system 100 compares the information included in the set of vehicle conditions 402 against the condition and determines whether the condition is satisfied by the set of vehicle conditions 402. If the set of conditions do not include any deterministic conditions, then automation system 100 does not evaluate any deterministic conditions at step 606.

At step 608, the automation system 100 evaluates the learned conditions specified by the rule 134, if any, based on output of machine learning model(s) 320 corresponding to the learned conditions and the set of vehicle conditions 402. Evaluating the learned conditions specified in a rule 134 is performed in a manner similar to that discussed above with respect to context matching module 406.

In some embodiments, automation system 100 parses the rule 134 and/or the one or more machine learning elements included in the rule 134 to identify the location of each machine learning element and determine whether any of the machine learning elements corresponds to a learned condition.

In some embodiments, to evaluate a given learned condition, automation system 100 provides the set of vehicle conditions 402 to a machine learning model 320 that corresponds to the given learned condition and receives output generated by the machine learning model 320. Automation system 100 determines whether the given learned condition is satisfied based on the output of the corresponding machine learning model 320.

In some embodiments, a machine learning model 320 is trained to receive a set of vehicle conditions and output a predicted set of vehicle conditions. To determine whether a learned condition is satisfied, automation system 100 determines whether the current set of vehicle conditions 402 matches the predicted set of vehicle conditions generated by the corresponding machine learning model 320. In some embodiments, a machine learning model 320 outputs a predicted condition. To determine whether a learned condition is satisfied, automation system 100 determines whether the current set of vehicle conditions 402 satisfies the predicted condition generated by the corresponding machine learning model 320. In some embodiments, a machine learning model 320 outputs a prediction as to whether the current set of vehicle conditions 402 satisfies a learned condition. To determine whether a learned condition is satisfied, automation system 100 determines whether the learned condition is satisfied based on whether the output generated by the corresponding machine learning model 320 indicates that the learned condition is satisfied.

At step 610, the automation system 100 determines whether the set of conditions specified by the rule 134 (including both deterministic and learned conditions), have been satisfied. If the set of conditions specified by the rule 134 are not satisfied, then the method 600 returns to step 604, where automation system 100 receives a set of updated vehicle conditions 402. If the set of conditions specified by the rule 134 have been satisfied, then the method 600 proceeds to step 612.

At step 612, the automation system 100 determines the deterministic actions specified by the rule 134, if any. Determining the deterministic actions specified by the rule 134 is performed in a manner similar to that discussed above with respect to action generator 408.

In some embodiments, automation system 100 parses the rule 134 to determine the set of actions specified by the rule 134. For each action, if the action is a deterministic action, then automation system 100 determines the action corresponding to the deterministic action. In some embodiments, determining the action corresponding to a deterministic action includes determining one or more vehicle components, applications, and/or services that perform the action and/or one or more parameters specified by the deterministic action.

At step 614, the automation system 100 determines the learned actions specified by the rule 134, if any, based on output of machine learning model(s) 320 corresponding to the learned actions and the set of vehicle conditions 402. Determining the deterministic actions specified by the rule 134 is performed in a manner similar to that discussed above with respect to action generator 408.

In some embodiments, to determine a given learned action, automation system 100 provides the set of vehicle conditions 402 to a machine learning model 320 that corresponds to the given learned condition and receives output generated by the machine learning model 320. Automation system 100 determines one or more actions corresponding to the given learned action based on the output of the corresponding machine learning model 320.

In some embodiments, a machine learning model 320 outputs a predicted set of vehicle conditions. The predicted set of vehicle conditions includes one or more target values for one or more vehicle conditions. To determine one or more actions corresponding to a learned action, automation system 100 determines, based on the current set of vehicle conditions 402, one or more actions that should be taken for one or more corresponding vehicle conditions included in the current set of vehicle conditions 402 to match the one or more target values generated by the corresponding machine learning model 320. In some embodiments, a machine learning model 320 outputs one or more predicted actions. Automation system 100 determines the one or more actions corresponding to the learned action based on the one or more predicted actions generated by the corresponding learned action.

At step 616, the automation system 100 causes the determined actions, including any determined deterministic and learned actions, to be performed. Causing one or more generated actions to be performed is performed in a manner similar to that discussed above with respect to action generator 408, output module 230, and output devices 174.

In some embodiments, for each determined action, automation system 100 identifies a specific component, application, or service that is to perform the action. Automation system 100 generates one or more commands for the identified component, application, or service that cause the identified component, application, or service to perform the action.

In some embodiments, automation system 100 transmits one or more commands for a target component, application, or service to the target component, application, or service. The one or more commands cause the target component, application, or service to perform one or more specific application events 236, perform one or more specific vehicle behaviors 232, modify one or more specific vehicle behaviors 232, and/or the like.

In sum, an automation system receives a rule that includes one or more deterministic elements and one or more machine learning elements. The rule corresponds to a vehicle automation routine for automating one or more features or functions associated with a vehicle. The automation system processes the rule to generate data collection criteria for each machine learning element. The automation system collects vehicle data associated with each machine learning element in accordance with the corresponding data collection criteria. The vehicle data associated with a given machine learning element is used to train a machine learning model corresponding to the machine learning element.

The output of a machine learning model is used in place of the corresponding machine learning element when executing the rule.

Additionally, the automation system monitors a set of values associated with conditions specified in a set of stored rules. Upon detecting a change in one of the set of values and/or periodically, the automation system determines whether the set of conditions specified by any of the stored rules has been satisfied. If a condition specified by a stored rule corresponds to a machine learning element, the automation system determines whether the condition is satisfied based on output of a machine learning model corresponding to the machine learning element. When the automation system determines that the set of conditions for a given stored rule has been satisfied, the automation system determines a set of actions specified by the given stored rule. If an action specified by the given stored rule corresponds to a machine learning element, the automation system determines whether the condition is satisfied based on output of a machine learning model corresponding to the machine learning element. The automation system causes one or more components of the vehicle to perform the set of actions.

At least one technical advantage of the disclosed techniques relative to the prior art is that, with the disclosed techniques, an automation system creates and executes vehicle automation routines that flexibly adapt to the behavior and preferences of individual users. Additionally, the automation system more accurately performs actions that conform to the expectations and preferences of the individual user compared to prior art approaches. Furthermore, because the automation system allows users to identify specific portions of an automation routine that should be learned based on user behavior, users do not have to fully define both the conditions and the actions for an automation routine when creating the automation routine. As a result, using the disclosed techniques, a user can create an automation routine even when the user does not know the exact scenario in which they would like a given action to be taken and/or the exact action(s) that they would like to have taken, which the user could not do using prior art approaches. These technical advantages provide one or more technological advancements over prior art approaches.

1. In some embodiments, a computer-implemented method for automating vehicle routines comprises receiving a rule that includes one or more deterministic elements and a machine learning element; collecting, during operation of a vehicle, a set of vehicle data based on the machine learning element; and training a machine learning model that corresponds to the machine learning element using the set of vehicle data, wherein the machine learning model is used to process the machine learning element during execution of the rule.

2. The computer-implemented method of clause 1, further comprising generating a set of data collection criteria based on the rule, wherein the collecting of the set of vehicle data is based on the set of data collection criteria.

3. The computer-implemented method of clause 1 or clause 2, further comprising determining a context associated with the machine learning element, wherein the collecting of the set of vehicle data is based on determining that the set of vehicle data matches the context.

4. The computer-implemented method of any of clauses 1-3, wherein the machine learning element is included in a condition portion of the rule, and wherein the machine learning model generates output usable to evaluate the condition portion of the rule.

5. The computer-implemented method of any of clauses 1-4, wherein the machine learning element is included in an action portion of the rule, and wherein the machine learning model generates output usable to determine one or more actions to be performed when a condition portion of the rule is satisfied.

6. The computer-implemented method of any of clauses 1-5, wherein the machine learning model is trained to generate one or more predicted values associated with the vehicle for evaluating whether a condition associated with the machine learning element is met.

7. The computer-implemented method of any of clauses 1-6, wherein the machine learning model is trained to generate one or more predicted conditions of the rule.

8. The computer-implemented method of any of clauses 1-7, wherein the machine learning model is trained to generate one or more predicted actions of the rule.

9. The computer-implemented method of any of clauses 1-8, further comprising receiving a set of values associated with operation of the vehicle; and evaluating the rule based on the set of values and an output of the machine learning model.

10. The computer-implemented method of any of clauses 1-9, further comprising determining that one or more conditions specified by the rule have been satisfied; and in response to determining that the one or more conditions have been satisfied, causing one or more actions specified by the rule to be performed.

11. In some embodiments, a computer-implemented method for automating vehicle routines comprises receiving a rule that includes one or more deterministic elements and a machine learning element; identifying a machine learning model corresponding to the machine learning element; evaluating one or more conditions specified by the rule based on a set of values associated with operation of a vehicle; determining whether the one or more conditions have been satisfied; in response to determining that the one or more conditions have been satisfied, determining one or more actions specified by the rule; and causing the one or more actions to be performed; wherein at least one of determining whether the one or more conditions have been satisfied or determining the one or more actions specified by the rule is based on output generated by the machine learning model in response to the machine learning model receiving the set of values as input.

12. The computer-implemented method of clause 11, wherein determining whether the one or more conditions have been satisfied comprises determining a condition corresponding to the machine learning element based on the output generated by the machine learning model.

13. The computer-implemented method of clause 11 or clause 12, wherein determining the one or more actions comprises determining an action corresponding to the machine learning element based on the output generated by the machine learning model.

14. The computer-implemented method of any of clauses 11-13, wherein the output generated by the machine learning model indicates one or more predicted values associated with a vehicle, and wherein determining whether the one or more conditions have been satisfied comprises evaluating the one or more conditions based on the one or more predicted values.

15. The computer-implemented method of any of clauses 11-14, wherein the output generated by the machine learning model indicates a predicted condition, and wherein determining that the one or more conditions have been satisfied comprises determining whether the predicted condition is satisfied based on the set of values.

16. The computer-implemented method of any of clauses 11-15, wherein the output generated by the machine learning model indicates whether at least one condition included in the one or more conditions has been satisfied.

17. The computer-implemented method of any of clauses 11-16, wherein the output generated by the machine learning model indicates a target value associated with a vehicle, and wherein determining the one or more actions comprises identifying at least one action for operating the vehicle to obtain the target value.

18. The computer-implemented method of any of clauses 11-17, wherein the output generated by the machine learning model indicates a predicted action, and wherein the one or more actions include the predicted action.

19. The computer-implemented method of any of clauses 11-18, wherein causing the one or more actions to be performed comprises identifying one or more vehicle components associated with the one or more actions; and generating one or more commands for the one or more vehicle components.

20. In some embodiments, a vehicle comprises a plurality of vehicle components; one or more memories storing instructions; and one or more processors coupled to the one or more memories and, when executing the instructions perform the steps of: receiving a rule that includes one or more deterministic elements and a machine learning element; identifying a machine learning model corresponding to the machine learning element; evaluating one or more conditions specified by the rule based on a set of values associated with operation of the vehicle; determining whether the one or more conditions have been satisfied; in response to determining that the one or more conditions have been satisfied, determining one or more actions specified by the rule; and causing the one or more actions to be performed by at least one vehicle component included in the plurality of vehicle components; wherein at least one of determining whether the one or more conditions have been satisfied or determining the one or more actions specified by the rule is based on output generated by the machine learning model in response to the machine learning model receiving the set of values as input.

Any and all combinations of any of the claim elements recited in any of the claims and/or any elements described in this application, in any fashion, fall within the contemplated scope of the present invention and protection.

The descriptions of the various embodiments have been presented for purposes of illustration, but are not intended to be exhaustive or limited to the embodiments disclosed. Many modifications and variations will be apparent to those of ordinary skill in the art without departing from the scope and spirit of the described embodiments.

Aspects of the present embodiments may be embodied as a system, method or computer program product. Accordingly, aspects of the present disclosure may take the form of an entirely hardware embodiment, an entirely software embodiment (including firmware, resident software, micro-code, etc.) or an embodiment combining software and hardware aspects that may all generally be referred to herein as a "module," a "system," or a "computer." In addition, any hardware and/or software technique, process, function, component, engine, module, or system described in the present disclosure may be implemented as a circuit or set of circuits. Furthermore, aspects of the present disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

Aspects of the present disclosure are described above with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine. The instructions, when executed via the processor of the computer or other programmable data processing apparatus, enable the implementation of the functions/acts specified in the flowchart and/or block diagram block or blocks. Such processors may be, without limitation, general purpose processors, special-purpose processors, application-specific processors, or field-programmable gate arrays.

The flowchart and block diagrams in the figures illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

While the preceding is directed to embodiments of the present disclosure, other and further embodiments of the disclosure may be devised without departing from the basic scope thereof, and the scope thereof is determined by the claims that follow.

**Claims**

**1.** A computer-implemented method for automating vehicle routines, the method comprising:

receiving a rule that includes one or more deterministic elements and a machine learning element;
identifying a machine learning model corresponding to the machine learning element;
evaluating one or more conditions specified by the rule based on a set of values associated with operation of a vehicle;
determining whether the one or more conditions have been satisfied;
in response to determining that the one or more conditions have been satisfied, determining one or more actions specified by the rule; and
causing the one or more actions to be performed;

wherein at least one of determining whether the one or more conditions have been satisfied or determining the one or more actions specified by the rule is based on output generated by the machine learning model in response to the machine learning model receiving the set of values as input.

2. The computer-implemented method of claim 1, wherein determining whether the one or more conditions have been satisfied comprises determining a condition corresponding to the machine learning element based on the output generated by the machine learning model.

3. The computer-implemented method of claim 1 or 2, wherein determining the one or more actions comprises determining an action corresponding to the machine learning element based on the output generated by the machine learning model.

4. The computer-implemented method of any preceding claim, wherein the output generated by the machine learning model indicates one or more predicted values associated with a vehicle, and wherein determining whether the one or more conditions have been satisfied comprises evaluating the one or more conditions based on the one or more predicted values.

5. The computer-implemented method of any preceding claim, wherein the output generated by the machine learning model indicates a predicted condition, and wherein determining that the one or more conditions have been satisfied comprises determining whether the predicted condition is satisfied based on the set of values.

6. The computer-implemented method of any preceding claim, wherein the output generated by the machine learning model indicates whether at least one condition included in the one or more conditions has been satisfied.

7. The computer-implemented method of any preceding claim, wherein the output generated by the machine learning model indicates a target value associated with a vehicle, and wherein determining the one or more actions comprises identifying at least one action for operating the vehicle to obtain the target value.

8. The computer-implemented method of any preceding claim, wherein the output generated by the machine learning model indicates a predicted action, and wherein the one or more actions include the predicted action.

9. The computer-implemented method of any preceding claim, wherein causing the one or more actions to be performed comprises:

identifying one or more vehicle components associated with the one or more actions; and
generating one or more commands for the one or more vehicle components.

10. The computer-implemented method of any preceding claim, further comprising:

collecting, during operation of the vehicle, a set of vehicle data based on the machine learning element; and
training the machine learning model using the set of vehicle data.

11. The computer-implemented method of claim 10, further comprising:
generating a set of data collection criteria based on the rule, wherein the collecting of the set of vehicle data is based on the set of data collection criteria.

12. The computer-implemented method of claim 10 or 11, further comprising:
determining a context associated with the machine learning element, wherein the collecting of the set of vehicle data is based on determining that the set of vehicle data matches the context.

13. The computer-implemented method of any of claims 10 to 12, wherein the machine learning element is included in a condition portion of the rule, and wherein the machine learning model generates output usable to evaluate the condition portion of the rule.

14. One or more non-transitory computer-readable storage media including instructions that, when executed by one or more processors at a computing device, cause the one or more processors to perform the method of any one of claims 1 to 13.

**15.** A vehicle comprising:

a plurality of vehicle components;
one or more memories storing instructions; and
one or more processors coupled to the one or more memories and, when executing the instructions perform the method of any one of claims 1 to 13.

100

Computing Device 110

Memory 120

Hybrid Rule Engine 122

User Interface 124

Data Manager 126

Model Trainer 128

Data Store 130

Vehicle Data 132

Rule(s) 134

Processing Unit 140

Network Interface 142

I/O Devices Interface 144

Network 150

External Data Source 152

Input Device(s) 172

Output Device(s) 174

Sensor(s) 176

FIG. 1

FIG. 2

300

Data Store 130

Vehicle Data 132

Vehicle Conditions 312

Data Manager 126

Data Collection Criteria 310

Model Trainer 128

Machine Learning Model(s) 320

Rule(s) 134

Hybrid Rule Engine 122

Hybrid Rule Parser 302

Machine Learning Model(s) 320

FIG. 3

FIG. 4

500

Receive rule that includes a machine learning element
502

Determine one or more data collection criteria associated with the machine learning element
504

Collect and store data in accordance with the one or more data collection criteria
506

Train machine learning model based on the collected data
508

Associate trained machine learning model with the machine learning element
510

Store rule and trained machine learning model
512

FIG. 5

600

Receive rule that includes one or more machine learning elements
602

Receive vehicle conditions
604

Evaluate deterministic condition(s) based on the vehicle conditions
606

Evaluate learned condition(s) based on output of corresponding trained machine learning model(s) and the vehicle conditions
608

Condition(s) Satisfied?
610

NO

YES

Determine deterministic action(s)
612

Determine learned action(s) based on output of corresponding machine learning model(s) and the vehicle conditions
614

Cause the determined action(s) to be performed
616

FIG. 6